Europäisches Patentamt

European Patent Office

Office européen des brevets

(19)

(11) **EP 1 494 212 A1**

(12) **EUROPEAN PATENT APPLICATION**

(43) Date of publication:
**05.01.2005 Bulletin 2005/01**

(51) Int Cl.7: **G11B 5/584**, G11B 5/64

(21) Application number: **04014149.1**

(22) Date of filing: **16.06.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventor: **Ishiguro, Tadashi**<br>**Odawara-shi Kanagawa (JP)** |
| (30) Priority: **30.06.2003 JP 2003187543** | (74) Representative: **HOFFMANN - EITLE**<br>**Patent- und Rechtsanwälte**<br>**Arabellastrasse 4**<br>**81925 München (DE)** |
| (71) Applicant: **Fuji Photo Film Co., Ltd.**<br>**Minamiashigara-shi Kanagawa (JP)** | |

(54) **Magnetic recording medium**

(57)     Disclosed is a magnetic recording medium which has a high S/N ratio of an output read from a servo signal, few deposits adhered to a head, and a low error ratio. The magnetic recording medium has a magnetic layer which includes a servo band onto which a servo signal for controlling tracking of a magnetic head is written and a data band onto which data are recorded. The servo signal is written onto the servo band which has been magnetized in one direction along length of the magnetic recording medium, by magnetizing the servo band in a direction opposite to the one direction. Further, the magnetic layer has indentation hardness of 60 to 140Kg/mm$^2$.

# FIG.1

1 Magnetic Tape
4 Magnetic Layer
3 Non-magnetic Layer
2 Base Film
5 Backcoat Layer

EP 1 494 212 A1

**Description**

BACKGROUND OF THE INVENTION

1. Field of the Invention

The present invention relates to a magnetic recording medium.

2. Description of the Related Art

In recent years, high density recording design in magnetic tapes has dramatically advanced. It can be expected to develop to the extent that a tape cartridge will have a recording capacity of several tens of terabytes. As such high density recording design develops, the number of data tracks formed on a magnetic tape is increased, the wide of data tracks and interval between adjacent data tracks are further narrowed, and a magnetic tape itself is thinned (refer to Japanese Unexamined Patent Application (KOKAI) Heisei No. 10-134337 (Paragraph No. 0003, 0004 and 0005)). Therefore, in order to make the recording/reproducing devices of a magnetic head trace data tracks, servo signals are written onto a magnetic tape beforehand, and the magnetic head reads the servo signals while the position of the magnetic head (position thereof along the width of the magnetic tape) is servo-controlled (refer to Japanese Unexamined Patent Application (KOKAI) Heisei No. 8-30942).

Accompanied with the thin design in magnetic tapes, magnetic quantity which can be detected from the servo signals on a magnetic tape is decreased. Further, the variation of the magnetic quantity which can be detected from the servo signals by the reading devices is also decreased. Due to this decrease, the magnetic tape recording/reproducing devices cannot read the servo signals correctly, whereby the position of the magnetic head is unable to be controlled with high precision.

In addition, if a magnetic layer which is formed on the surface of a magnetic recording medium for magnetic recording has a soft surface, then some tips or cuttings fall off the magnetic layer, and stick to a magnetic head, thus embedding the head gap of the magnetic head. As a result, the servo signals cannot be recorded onto the magnetic recording medium, or a reading/reproducing operation is failed in a driving system. On the other hand, if the magnetic layer has a hard surface, then it is hard to obtain the appropriate contact with the magnetic head, which may cause inaccurate reading of the servo signals or increase in the error rate.

SUMMARY OF THE INVENTION

The present invention is made in view of the above-mentioned problems. An object of the present invention is to provide a magnetic recording medium which has a high S/N ratio of an output read from a servo signal, few deposits adhered to a head, and a low error ratio.

According to an aspect of the present invention, a magnetic recording medium which includes a base film and a magnetic layer formed on the base film, and the magnetic layer is provided with a servo band onto which a servo signal for controlling tracking of a magnetic head is written and a data band onto which data are recorded. In this regard, the servo signal is written onto the servo band which has been magnetized in one direction out of two directions along the length of the magnetic recording medium, by magnetizing the servo band in a direction opposite to the one direction. Further, the magnetic layer is provided with a surface having indentation hardness ranging from 60 to 140Kg/mm$^2$, which is measured by use of a diamond indenter.

In this magnetic recording medium, the servo signal recorded on the servo band has a servo pattern constituted of a portion which is magnetized in one direction along the length of the magnetic recording medium, for example, in the traveling direction thereof and a portion which is magnetized in the direction opposite to the one direction. In this manner, a magnetic field which is generated at a boundary between the forwardly magnetized portion and the reversely magnetized portion has a great variation rate and a large variation amount. Hence, when this servo signal is read by servo signal reading devices of a magnetic head, an output read from the servo signal is increased at this boundary, thus making it possible to improve a SN ratio of the output. This technique for improving the SN ratio by use of two magnetized directions is disclosed in Japanese Unexamined Patent Application (KOKAI) Heisei No. 8-30942. Moreover, the magnetic layer has indentation hardness ranging from 60 to 140Kg/mm$^2$, and this hardness contributes to decrease in chips or cuttings of the magnetic layer which are generated when the magnetic recording medium runs in contact with a guide in a driving system. This prevents the chips or cuttings from moving off the magnetic layer and embedding the head gap of the magnetic head. Consequently, it is prevented that the servo signal cannot be recorded onto the magnetic recording medium, or a reading/reproducing operation is failed in a driving system. In addition, the contact with the magnetic head is optimized so that the servo signal is correctly read, thus allowing the error rate to be reduced.

**EP 1 494 212 A1**

In the magnetic recording medium of the present invention, the data band of the above-described magnetic recording medium may not be magnetized.

Data can be recorded onto the data band by overwriting the data band without demagnetizing it, but this overwrite operation is affected by magnetization having originally been recorded onto the data band. However, with this magnetic tape of which data band is not magnetized, it is possible to record a signal thereonto in an excellent condition without undergoing any interference of the original magnetization.

According to still another aspect of the present invention, the magnetic layer having a thickness of especially 10 to 200nm can exert the above-described effect.

Features and objects of the present invention other than the above will become clear by reading the description of the present specification with reference to the accompanying drawings.

BRIEF DESCRIPTION OF THE DRAWINGS

For a more complete understanding of the present invention and the advantages hereof, reference is now made to the following description taken in conjunction with the accompanying drawings wherein:

FIG.1 is a schematic sectional view depicting a structure of a magnetic tape according to an embodiment of a magnetic recording medium of the present invention;

FIG.2A is an enlarged plane view depicting magnetization of the magnetic tape according to the embodiment of the present invention;

FIG. 2B is a view depicting an output read from a servo signal on the magnetic tape of FIG. 2A;

FIG. 2C is a view depicting a signal for use in writing the servo signal onto the magnetic tape of FIG. 2A;

FIG.3 is a view depicting a shape of an indenter for use in measuring indentation hardness;

FIG.4 is a view depicting a load-displacement curve obtained by measuring the indentation hardness of a magnetic layer of the magnetic tape;

FIG. 5 is a conceptual view depicting a fabricating process of the magnetic tape; and

FIG.6 is a schematic view depicting a structure of a servo writer.

DETAILED DESCRIPTION OF THE PREFERRED EMBODIMENT

At least the following matters will be made clear by the explanation in the present specification and the description of the accompanying drawings.

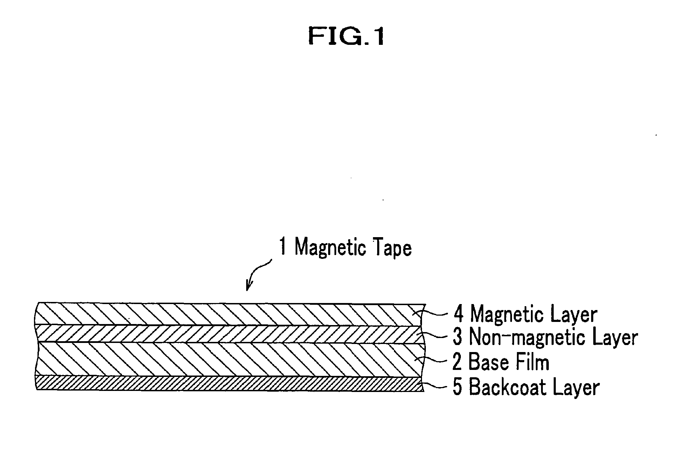

An embodiment of the present invention will be described below in detail with reference to the figures. Fig. 1 is a schematic sectional view depicting a structure of a magnetic tape according to an embodiment of the present invention. A magnetic tape 1 shown in Fig. 1 includes a base film 2, a non-magnetic layer 3 laminated on one entire surface of the base film 2, a magnetic layer 4 laminated on the non-magnetic layer 3 and a backcoat layer 5 laminated on the base film 2 opposite to the surface on which the non-magnetic layer 3 and the magnetic layer 4 are laminated.

The base film 2 which can be used herein may be a known biaxial stretched film, including, but being not restricted to, polyethylene terephthalate, polyamide (especially, aromatic polyamide) , polyimide, polyamide-imide and polybenzoxazole. The base film 2 may be subjected beforehand to a surface-treatment such as corona discharge treatment, plasma treatment, adhesion enhancing treatment, thermal treatment or dust removal treatment. The base film 2 has a center line average surface roughness (Ra) of preferably 0.001 to 0.03μm, more preferably 0.001 to 0.02μm, and still more preferably 0.001 to 0.01μm. Moreover, it is preferable that the base film 2 has not only the small centerline average surface roughness (Ra), but does not have coarse protrusions of 1 μm or more. The coarse geometry of the surface of of the base film 2 can be appropriately controlled in accordance with the size and quantity of a filler added thereto.

The magnetic layer 4, which is laminated on the whole surface of the base film 2 through the non-magnetic layer 3, records data and servo signals therein.

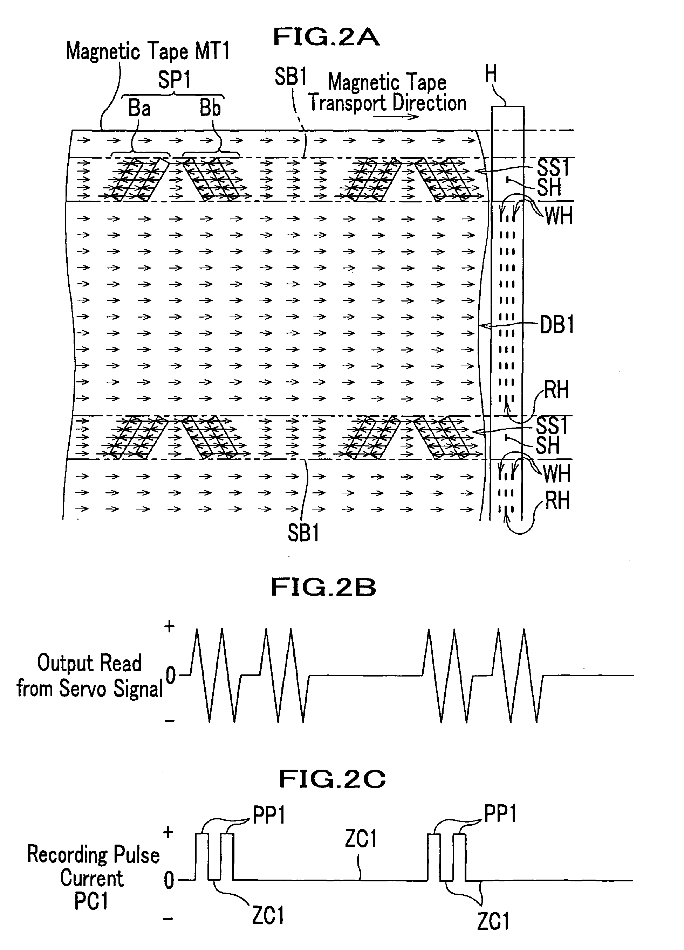

Fig. 2A is an enlarged plan view depicting a magnetized state of the magnetic layer 4; Fig. 2B is a view depicting an output read from the servo signal on each servo band of a magnet tape; and Fig. 2C is a view depicting a recording signal being used when the serve bands are provided on the magnetic tape by writing the servo signals thereto.

As shown in Fig. 2A, a magnetic tape MT1 includes a plurality of servo bands SB1 provided along the tape length, and at least one data band DB1 provided between the adjacent servo bands SB1. Each servo band SB1 is magnetized in the tape traveling direction along the tape length (refer to a large arrow in the figure, hereinafter referred to as "forward direction" as appropriate). In Fig. 2A, small arrows each represent a magnetized direction, and servo signals SS1 are written onto the servo bands SB1 by magnetizing the servo bands SB1 in the direction opposite to the forward direction. Each servo signal is constituted of servo patterns SP1 which are repeatedly formed at prescribed intervals and each of which is formed of bursts Ba and Bb. Here, the burst Ba is a portion which is magnetized in the shape of two strips having the slope of a positive angle relative to the forward direction, and the burst Bb is a portion which is positioned following the burst Ba and which is magnetized in the shape of two strips having the slope of a negative angle relative to the forward direction.

Each data band DB1 positioned between adjacent servo bands SB1 is uniformly magnetized in the forward direction as well. Naturally, the magnetic tape MT1 shown in Fig. 2 has no recording data therein. When data are recorded onto the magnetic tape MT1, portions magnetized in the forward or reverse direction in accordance with data contents are formed in each data band DB1.

In this embodiment, each servo pattern SP1 is constituted of four stripes having slopes of positive and negative angles in twos, but modifications can be made as appropriate. For example, it may be constituted of ten stripes having slopes of positive and negative angles in fives and, further two types of servo patters SP1 may be alternately arranged; one is constituted of ten stripes having slopes of positive and negative angles in fives and the other is constituted of eight stripes in fours. In this figure, the servo patterns SP1 are excessively enlarged relative to the magnetic tape MT1, for the sake of understanding.

Fig. 2A shows a positional relation between the magnetic tape MT1 and a magnetic head H. The magnetic head H has servo signal read devices SH which read corresponding servo signals SS1, and the servo signal read devices SH are arranged along the width of the magnetic tape MT1 at the same intervals as those of servo bands SB1. Each read device SH is configured to have much smaller dimensions than the wide of each servo band SB1. Between the adjacent servo signal read devices SH, a plurality of write devices WH are arranged in two lines along the width of the magnetic tape 1 in order to write signals onto corresponding data bands DB1. On the other hand, between the two lines of the write devices WH, a plurality of reproducing devices RH are arranged in a line along the width of the magnetic tape 1.

For the above-described magnetic tape MT1, when the magnetic head H of a magnetic tape drive (not shown in the figure) writes/reproduces data, the servo signal read devices SH read the corresponding servo signals SS1. The servo pattern SP1 of each servo signal SS1 is constituted of strips being inclined with respect to the traveling direction of the magnetic tape MT1 (the tape length) and being not in parallel to one another and, thus individual instants at which the servo signal read devices SH read the corresponding servo signals SS1 to detect pulse signals differs from one another, depending on the relative position of the magnet tape MT1 and the magnet head H. For this reason, the position of the magnetic head H is controlled such that the timing of reading the pulse signals meets prescribed conditions. As a result, the write devices WH and the reproducing devices RH can be positioned with precision on corresponding tracks of the data band DB1.

The output (peak voltage value) which is read from the servo signal by each servo signal read device SH differs depending on a magnetic variation rate or quantity between the portion where no signal is recorded and the portion where signal is recorded. In this embodiment, the magnetic orientation on the magnetic tape MT1 greatly changes from the forward direction to the reverse direction at the boundary between the forwardly magnetized servo band SB1 and the reversely magnetized servo band SP1. Likewise, the magnetic orientation greatly changes as well from the reverse direction to the forward direction at the boundary therebetween. Therefore, as shown in Fig. 2B, the output which is read from the servo band SB1 at each above boundary has a large output variation in accordance with such great magnetic change. In such a manner, it is possible to improve the S/N ratio of the output read from the servo signal SS1.

Incidentally, in the magnetic tape MT1 shown in Fig. 2, the servo band SB1 is magnetized in the forward direction, but the data bond DB1 inevitably may not be magnetized. Even in this type of magnetic tape, as in the case of the above-described magnetic tape MT1, thanks to the structure where the magnetic orientation on the servo band SB1 changes between the forward and reverse directions, the output which is read from the servo signal SS1 by the servo signal read device of the magnetic head H can have the improved S/N ratio. In addition, in this case, thanks to the non-magnetized data band, the servo band SB1 can be magnetized without any magnetic interference from the data band DB1, unlike the above-described magnetic tape MT1. This ensures the data recording.

The magnetic tape in which the magnetic layer 4 has the above-described structure can be effective, especially when being applied to a magnetic tape having the inevitably thin magnetic layer or when being used with a magnetic tape drive having the narrow servo signal read devices for reading servo signals. Conventionally, it has been avoided that servo signals are written by magnetizing in the reverse direction the portions having been magnetized in the forward direction, because of saturation of MR elements. However, the arrangement of the present invention which can obtain the high output from the servo signals is appropriately applied to a magnet tape with a thin magnetic layer and narrow data tracks for an expanded storage capacity per squire.

Mrt of the magnetic layer 4 (a product of a residual magnetization value Mr and a thickness t of a magnetic layer)is preferably $5.0 \times 10^{-10}$T•m ($4.0 \times 10^{-2}$memu/cm$^2$) to $7.5 \times 10^{-8}$T•m ($6.0 \times 10^{-2}$memu/cm$^2$) , more preferably $5.0 \times 10^{-10}$T•m ($4.0 \times 10^{-2}$memu/cm$^2$) to $5.0 \times 10^{-8}$T•m ($4.0 \times 10^{-2}$memu/cm$^2$), and most preferably $5.0 \times 10^{-10}$T•m ($4.0 \times 10^{-2}$memu/cm$^2$) to $2.5 \times 10^{-8}$T•m ($2.0 \times 10^{-2}$memu/cm$^2$).

Moreover, Tw (the wide of track of a servo signal read device) is preferably 0.1 to 30μm, more preferably 0.1 to 15μm and most preferably 0.1 to 7μm.

In the above magnet tape, the servo signal is constituted of patterns formed by reversely magnetizing the servo band that has been magnetized in one direction along the tape length, for example, the forward direction. In this way, when the servo signal read device of the magnetic head reads the servo signal, the output read from the servo signal is increased at the boundary between the forwardly magnetized portion and the reversely magnetized portion of the servo pattern. It is because the variation rate and quantity of the magnet field are increased at this boundary. Consequently, the SN ration of the output which is read from the servo signal can be improved.

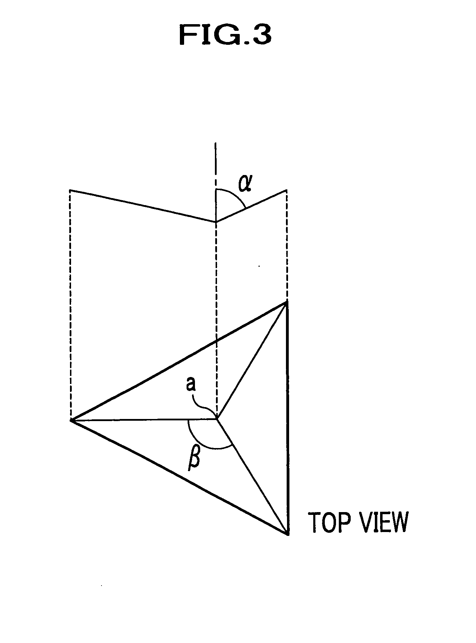

Further, the magnetic layer 4 has indentation hardness on the top surface (0.1μm depth from the surface) of 60 to 140Kg/mm$^2$, and preferably 80 to 120Kg/mm$^2$. In the present invention, the indentation hardness (DH) represents the hardness of the top surface of the magnetic layer. The measurement of this hardness is done on the condition that a diamond indenter is pushed into the magnetic layer 4 at a load of 5mgf and the indenter does not reach to the top surface. Here, the indenter is provided with a triangular pyramid point a that has a curvature radius of 100nm, a blade angle $\alpha$ of 65 degrees and a ridge angle $\beta$ of 115 degrees, as shown in Fig. 3.

Incidentally, the indenter having the above dimensions is known as a Verkovich indenter. A measuring device which is provided with the Verkovich indenter and which can measure indentation hardness at a load of 5mgf may be a super fine indenter hardness measuring device (model number ENT-1100a) produced by Elionix Co., or the like. Furthermore, the plastic deformation quantity of the magnetic film is determined as follows.

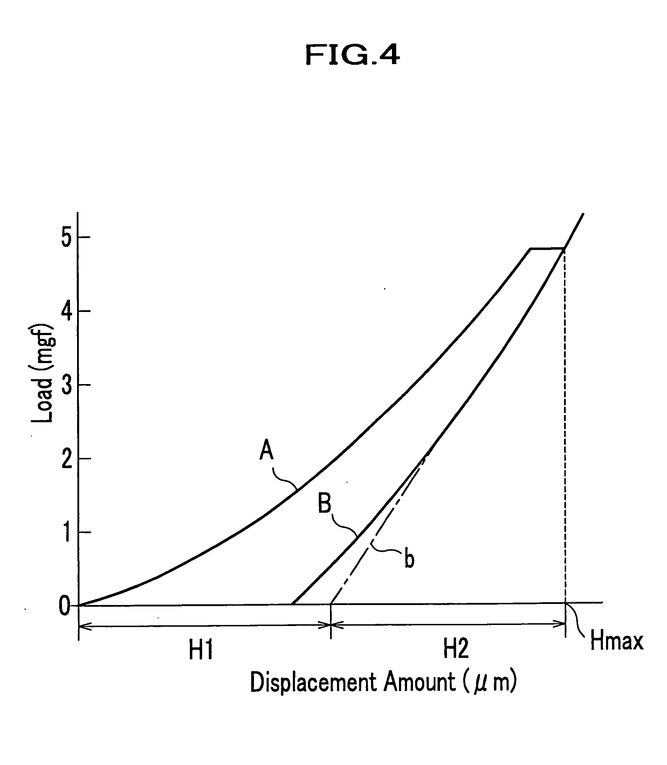

Fig. 4 shows the change of displacement quantity of the Verkovich indenter, which is measured on the condition that the Verkovich indenter is pushed into a sample while the load is continuously increased, and the indenter is released therefrom when the load reaches to 5mgf (49.0μN). As shown by a curve A in the figure, the displacement amount is increased as the load is enhanced, and the displacement amount has the maximum displacement amount (Hmax) at a load of 5mgf. Further, after the load is released, the displacement amount is gradually decreased, as shown by a curve B, but the displacement amount has a certain value even at a load of zero. Then, a tangent line b to the curve B at the maximum displacement amount (Hmax) is drawn to the point at a load of zero, that is, the horizontal axis, so that the plastic deformation quantity ($H_1$) is obtained. Here, an elastic deformation quantity ($H_2$) is a value obtained by subtracting this plastic deformation quantity ($H_1$) from the maximum displacement amount. Further, the indentation hardness (DH) is determined by a following equation (1):

$$DH = 3.7926 \times 10^{-2} \{Pmax/(Hmax)^2\} \ (Kg/mm^2)$$

$$= 0.37 \{Pmax/(Hmax)^2\} \ (MPa) \tag{1}$$

where Pmax represents the maximum load, and Hmax represents the maximum displacement amount. Here, in the present invention, 1Kg/mm$^2$ is substituted by 9.8MPa. The plastic deformation quantity of the magnetic layer is preferably 0.02 to 0.04 μm, and more preferably 0.025 to 0.04 μm.

Moreover, the thickness of the magnetic layer 4 is preferably 10 to 200nm, and more preferably 10 to 100nm.

Ferromagnetic powder used as a component of the magnetic layer 4 is not especially limited, but ferromagnetic metal powder or hexagonal ferrite powder is preferred.

The average particle diameter of the ferromagnetic powder is preferably 20 to 60 nm. If ferromagnetic powder used in the present invention has an acicular shape, then the average particle size is represented by an average major axis length. The average major axis length is preferably 30 to 45nm, and the average acicular ratio is preferably 3 to 7. On the other hand, if the ferromagnetic powder has a tabular shape, then the average particle size is represented by an average tabular length, it is preferably 25 to 35nm, and the average tabular ratio is preferably 2 to 5.

The ferromagnetic metal powder has a SBET (specific surface area by BET method) of typically 40 to 80m$^2$/g, and preferably 50 to 70m$^2$/g. The crystalline size thereof is typically 10 to 25nm, and preferably 11 to 22nm. The pH of the ferromagnetic metal powder is preferably 7 or more. Examples of the ferromagnetic metal powder include simple substances such as Fe or Ni, and alloys such as Fe-Co, Fe-Ni, Co-Ni or Co-Ni-Fe. Further, the ferromagnetic metal powder may contain aluminum, silicon, sulfur, scandium, titanium, vanadium, chromium, manganese, copper, zinc, yttrium, molybdenum, rhodium, palladium, gold, tin, antimony, boron, barium, tantalum, tungsten, rhenium, silver, lead, phosphorus, lanthanum, cerium, praseodymium, neodymium, tellurium and bismuth in a ratio of 20% or less by weight relative to the metal component. Moreover, the ferromagnetic metal powder may contain a small quantity of water, a hydroxide or an oxide. The fabricating method of the above ferromagnetic metal powder is already known and, therefore the ferromagnetic metal powder used in the present invention can be fabricated in accordance with a known method. The shape of the ferromagnetic metal powder is not especially limited, but may typically be acicular, particle-shaped, cubic, rice-particle shaped or tabular. Especially, the acicular shape is preferred.

The ferromagnetic metal powder has a coercivity Hc of preferably 144 to 300KA/m, and more preferably 160 to 224KA/m. Further, the saturation magnetization thereof is preferably 85 to 150A·m$^2$/Kg, and more preferably 100 to 130A·m$^2$/Kg.

Examples of hexagonal ferrite powder include barium ferrite, strontium ferrite, lead ferrite, calcium ferrite and various substitution products thereof such as Co substitution product. Specifically, cited is magnetoplumbite type barium ferrite, strontium ferrite, magnetoplumbite type ferrite having grains coated with spinel, compound magnetoplumbite type barium ferrite containing part of a spinel phase, strontium ferrite or the like. Further, it may contain, in addition to predetermined atoms, atoms such as Al, Si, S, Nb, Sn, Ti, V, Cr, Cu, Y, Mo, Rh, Pd, Ag, Sn, Sb, Te, W, Re, Au, Bi, La, Ce, Pr, Nd, P, Co, Mn, Zn, Ni, B, Ge or Nb. Typically, the hexagonal ferrite powder to which elements such as Co-Zn, Co-Ti, Co-Ti-Zr, Co-Ti-Zn, Ni-Ti-Zn, Nb-Zn-Co, Sn-Zn-Co, Sn-Co-Ti or Nb-Zn are added can be used. Some ferrite powder may contain particular impurities in accordance with ingredients and a fabricating method. The hexagonal ferrite powder has a hexagon tabular shape.

When a magnetic tape is reproduced by especially a magnetic resistance head (MR head) for increasing track density, noise outputted from the magnetic tape needs to be decreased. If the ferrite powder in the magnetic tape has the too small average tabular length, then the stable magnetization thereof cannot be expected due to thermal fluctuation, whereas if the ferrite powder has the too large average tabular length, then the noise is increased. Consequently, the above both cases are not suitable for the high density magnetic recording. In addition, if the ferrite powder has a small average tabular ratio, then the packing property in the magnetic layer is preferably enhanced, but the sufficient orientation cannot be obtained. On the other hand, if the ferrite powder has too large average tabular ratio, then the noise is increased due to the stacking of the powder. The specific surface area by BET method of the ferrite powder is typically 30 to 200m$^2$/g, and preferably 50 to 100m$^2$/g . Generally, the specific surface area coincides with the value determined based on the tabular diameter and thickness. The sharper distributions of the tabular diameter and thickness are, the more preferable they are. These distributions are not normal ones in many cases, but in the case where the standard distribution of a particle size (the tabular length or thickness) is expressed, $\sigma$/(average tabular length or average tabular thickness) equals 0.1 to 0.5. In order to sharpen these distributions, powder generation reaction system is made uniform to the extent possible, as well as the generated powder is subjected to a distribution improving treatment. For example, a technique in which extremely fine powder is selectively dissolved in acid solution or the like is known. In a vitrification crystal technique, the generated powder is subjected to a thermal treatment for several times whereby it is split into nucleation and growth, thereby providing uniform powder. Magnetic powder having a coercivity Hc of about 40 to 400KA/m can be formed, but the coercivity Hc is preferably 144 to 300KA/m. The higher Hc is advantageous to the high density recording, but it is limited by the capacity of the recording head. The Hc can be controlled by powder size (tabular length or thickness), the type and quantity of the contained element, substitution site of elements, powder production reaction condition or the like.

It is preferable that the hexagonal ferrite ferromagnetic metal powder has saturation magnetization $\sigma$s of 30 to 70A•m$^2$/Kg. The $\sigma$s intends to be lowered as the powder is finer. A fabricating method of fine powder is to decrease a crystallization temperature, to shorten thermal treatment time, to increase the quantity of added compounds, to increase treated surface area, or the like.

W-type hexagonal ferrite can also be used. In some cases, the surface of powder of the magnetic material is treated by materials suitable for dispersion medium or polymer when the magnetic material is dispersed. A surface treatment chemical is an inorganic or organic compound. Typical examples of the compound mainly include an oxide such as Si, Al or P, hydroxide, various silane couplings and various titanium couplings. The quantity of the compound is 0.1 to 10% by weight relative to the magnetic material. The pH of the magnetic material is also an important factor in the dispersion. The pH of about 4 to 12 is a typically suitable value for dispersion medium or polymer, but the pH of about 6 to 11 is selected in consideration of chemical stability and storage capacity. Also, water contained in the magnetic material affects the dispersion. The suitable value of contained quantity of the water depends on dispersion medium or polymer, but the value of 0.1 to 2.0% by weight is typically selected. A fabricating method of hexagonal ferrite ferromagnetic metal powder is not exclusively limited, but there are following examples:

(1) A vitrification crystal method includes the steps of mixing a metal oxide that substitutes barium carbonate, iron oxide and iron with a grass forming material such as boron oxide so as to form a ferrite having a desired composition, melting the ferrite, rapidly cooling the molten ferrite to form a non-crystalline solid, subjecting the non-crystalline solid to a thermal treatment, and washing and grinding the solid, thereby applying a barium ferrite crystal powder material;

(2) A hydrothermal reaction method includes the steps of neutralizing barium ferrite composition chloride metal solution with alkali, removing by-product materials from the neutralized solution, subjecting the by-product materials to a liquid phase thermal treatment, and washing, drying and grinding the by-product materials, thereby applying a barium ferrite crystal powder material; and

(3) A coprecipitation method includes the steps of neutralizing barium ferrite composition chloride metal solution with alkali, removing by-product materials from the neutralized solution, drying the by-product materials at a temperature of 1100 degrees or less and grinding the by-product materials, thereby providing a barium ferrite crystal powder material.

A binder is a conventionally known thermoplastic resin, thermosetting resin, reactive resin or mixture thereof. The thermoplastic resin which has a glass transition temperature of about -100 to 150 degrees, a number average molecular weight of about 1,000 to 200,000 and preferably 10,000 to 100,000, and a polymerization degree of about 50 to 1,000 is used.

Examples of the above resin include a polymer or copolymer, polyurethane resin and various rubber resins. Here, the polymer or copolymer contains, as a constitutional unit, chloroethene, vinyl acetate, vinyl alcohol, maleic acid, acrylic acid, acrylic ester, vinylidene chloride, acrylonitrile, methacrylic acid, methacrylic acid ester, styrene, butadiene, ethylene, vinyl butyral, vinyl acetal and vinyl ether. Moreover, examples of a thermosetting or reactive resin include a phenol resin, epoxy resin, polyurethane cured resin, urea resin, melamine resin, alkyd resin, acrylic reaction resin, formaldehyde resin, silicone resin, epoxy-polyamide resin, a mixture of a polyester resin and an isocyanate prepolymer, a mixture of polyester polyol and polyisocyanate, a mixture of polyurethane and polyisocyanate. Details of these resins are described in 'Plastic Handbook' published by Asakura Publishing. Also, a known electron cured resin can be used for a lower application layer or an upper magnetic layer.

The non-magnetic layer 3 contains non-magnetic powder and binder as main components. Non-magnetic powder used for the non-magnetic layer 3 can be selected from anorganic substance compounds such as metal oxide, metal carbonate, metal hydrosulfate, metal nitride, metal carbide, metal sulfide and the like. Specifically, for example, $\alpha$-alumina with an $\alpha$-conversion of 90 to 100%, $\beta$-alumina, $\gamma$-alumina, silicon carbide, chromium oxide, cerium oxide, $\alpha$-iron oxide, corundum, silicon nitride, titanium carbide, titanium oxide, silicon dioxide, tin oxide, magnesium oxide, tungsten oxide, zirconium oxide, boron nitride, zinc oxide, calcium carbonate, calcium sulfate, barium sulfate, molybdenum disulfide or the like can be used alone or in combination. Titanium dioxide, zinc oxide, iron oxide or barium sulfate is especially preferred, and titanium dioxide is more especially preferred.

This non-magnetic powder has an average particle diameter of preferably 0.005 to 2$\mu$m, but several types of non-magnetic powder having different average particle diameters may be combined as needed. Alternatively, the distribution of the particle diameter of a single type of powder may be widened, producing the same effect as the case of using several types of powder. What is preferred most is non-magnetic powder having an average particle diameter of 0.01 to 0.2$\mu$m. The tap density thereof is 0.05 to 2g/ml, and preferably 0.2 to 1. 5g/ml. The water content thereof is 0.1 to 5% by weight, and more preferably 0.2 to 3% by weight. The pH thereof is 2 to 11, and more preferably 6 to 9. The specific surface area thereof is 1 to 100m$^2$/g, preferably 5 to 50m$^2$/g, and more preferably 7 to 40m$^2$/g. The crystalline size thereof is preferably 0.01 to 2$\mu$m. The DBP oil absorbent thereof is 5 to 100ml/100g, preferably 10 to 80ml/100g, and more preferably 20 to 60ml/100g. The specific gravity thereof is 1 to 12, and preferably 3 to 6. The shape thereof may be acicular, spherical, polyhedral or tabular.

Binder used for the non-magnetic layer 3 may be that used for the magnetic layer 4, but is not especially limited.

It is preferable that the backcoat layer 5 contain carbon black and inorganic powder in order to maintain the high traveling durability, when being used in a magnetic tape requested of high continuous traveling durability.

With regard to the carbon black, it is preferable that two types of carbon black having different average particle diameters are used in combination. In this case, it is preferable that are used in combination, fine particle carbon black having an average particle diameter of 10 to 20nm and coarse particle carbon black having an average particle size of 230 to 300nm. In general, adding such the fine particle carbon black can decrease the surface electrical resistance of the backcoat layer, as well as the light transmission. Some magnet recording devices take advantage of the light transmission in using operational signals and, hence adding the fine particle carbon black is especially effective for such type of the magnet recording devices. Also, typically, the fine particle carbon black serves as liquid lubricant having excellent retention, and contributes to the reduction in the friction coefficient. In contrast to this, the coarse particle carbon black having an average particle diameter of 230 to 300nm serves as solid lubricant, and contributes to the reduction in the friction coefficient because of the formation of fine protrusions on the surface of the backcoat layer and of the decrease in the contact area thereof.

Specific examples of market available fine and coarse particle types of carbon black are ones described in International Publication WO98/35345 leaflet. When two types of carbon black having the average particle sizes of 10 to 20nm and 230 to 300nm, respectively, are used in combination for the backcoat layer, a content ratio (weight ratio) of the fine and coarse particle sizes is 98:2 to 75:25 and, more preferably 95:5 to 85:15. The content quantity of the carbon black in the backcoat layer is typically 30 to 80 parts by weight relative to the binder of 100 parts by weight and, preferably 45 to 65 parts by weight (if two types of the carbon black are used, then the content quantity means the total quantity).

With regard to the inorganic powder, it is preferable that two types having different hardness values are used in combination. Specifically, it is preferable that soft inorganic powder having Mohs hardness of 3 to 4.5 and hard inorganic powder having Mohs hardness of 5 to 9 are used. Adding the soft inorganic powder having Mohs hardness of 3 to 4.5 can stabilize the friction coefficient in the continuous traveling. Besides, the soft inorganic powder having the above hardness does not abrade a sliding guide pole. Further, the average particle size of the soft inorganic powder is preferably 30 to 50nm. Examples of the soft inorganic powder having Mohs hardness of 3 to 4.5 include calcium sulfate, calcium carbonate, calcium silicate, barium sulfate, magnesium carbonate, zinc carbonate and zinc oxide. These examples can be used alone or in combination. The content quantity of the soft inorganic powder in the backcoat layer is preferably 10 to 140 parts by weight relative to the carbon black of 100 parts by weight, and more preferably 35 to 100 parts by weight.

Adding the hard inorganic powder having Mohs hardness of 5 to 9 enhances the hardness of the backcoat layer, improving the traveling durability. Using this hard inorganic powder together with the above carbon black or the above soft inorganic powder leads less deterioration in the continuous traveling property, thus providing the tough backcoat layer. Moreover, adding the hard inorganic powder imparts the appropriate polishing, thereby reducing the adhesion of cuttings on a tape guide pole and the like. Especially, using the hard inorganic powder in combination with the soft inorganic powder improves the sliding property against the guide pole having the rough surface, which results in stabilizing the friction coefficient of the backcoat layer. The average particle diameter of the hard inorganic powder is preferably 80 to 250nm, and more preferably 100 to 210nm. Examples of the hard inorganic powder having Mohs hardness of 5 to 9 include $\alpha$-iron oxide, $\alpha$-alumina and chromium oxide ($Cr_2O_3$). These examples may be used alone or in combination. Among them, $\alpha$-iron oxide or $\alpha$-alumina is preferred. The content quantity of the hard inorganic powder is typically 3 to 30 parts by weight relative to carbon black of 100 parts by weight, and more preferably 3 to 20 parts by weight.

The backcoat may contain a lubricant. The lubricant may appropriately be selected from the lubricants exemplified for the non-magnetic or magnetic layer. The selected lubricant may be added to the backcoat layer, typically in a ratio of 1 to 5 parts by weight relative to binder of 100 parts by weight.

The magnet recording medium of the present invention may include other layers in addition to the non-magnetic layer, the magnetic layer and the backcoat layer. For example, the magnet recording medium of the present invention may include a soft magnetic layer containing soft magnetic powder, a second magnetic layer, a cushion layer, an overcoat layer, an adhering layer and a protective layer. These layers may be provided at appropriate positions so as to effectively serve respective functions. The thickness of the layers may be 0.5 to 3$\mu$m. It is preferable that the non-magnet layer is thicker than the magnetic layer.

Next, a fabricating method for a magnetic tape according to the embodiment of the present invention will be described by using a case of fabricating a magnet tape MT1 of which whole surface is magnetized in the forward direction.

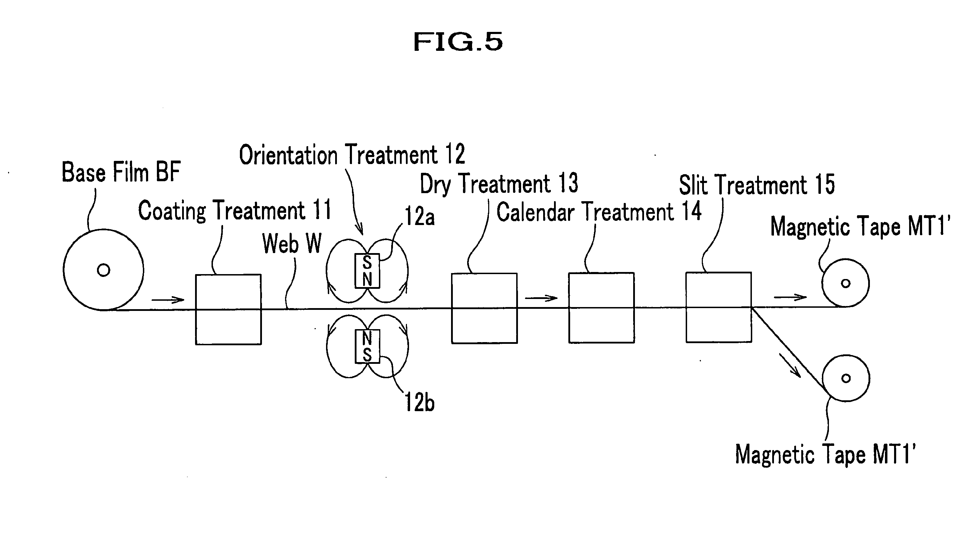

Fig. 5 is a view depicting part of a fabricating process of the magnet tape.

As shown in Fig. 5, a magnet tape MT1' is fabricated by flowing a base film BF through a coating treatment 11, an orientation treatment 12, a dry treatment 13, calender treatment 14 and slit treatment 15. Note that the magnetic tape MT1'which had been subjected to up to the slit treatment 15 does not have any servo signals recorded therein.

In the coating treatment 11, a magnetic coating material in which magnetic powder is dispersed in a solvent medium is coated on one of the surfaces of the base film BF. In some case, the backcoat layer (the other surface) is also coated.

In the orientation treatment 12, the magnetic orientation of the magnetic coating material which has been coated in the coating treatment 11 is aligned, before the material is completely dried. A web W on which the magnetic coating material had been coated is passed through a space having the both sides on which two magnets 12a, 12b are arranged in such a manner that the poles of the same type (North pole in this figure) face toward each other. In this way, the web W is passed between the same poles of the magnets, so that the magnet field lines can be formed in parallel to the surfaces of the web W along the tape length. As a result, the orientation of the magnetic powder in the wet magnetic coating material is aligned with that of the magnet field lines. Note that the magnets are permanent magnets, electromagnets or a combination thereof.

In the dry treatment 13, the magnetic coating material is dried with infrared radiation, hot air or the like. In the calender treatment 14, the web W is rolled while being pressed by a pair of rollers formed of metal or the like, whereby the evenness of the magnetic layer is enhanced.

In the slit treatment 15, the wide web W is cut into narrow tape shapes to form individual magnetic tapes MT1', and the magnetic tapes MT'1 are separately taken up.

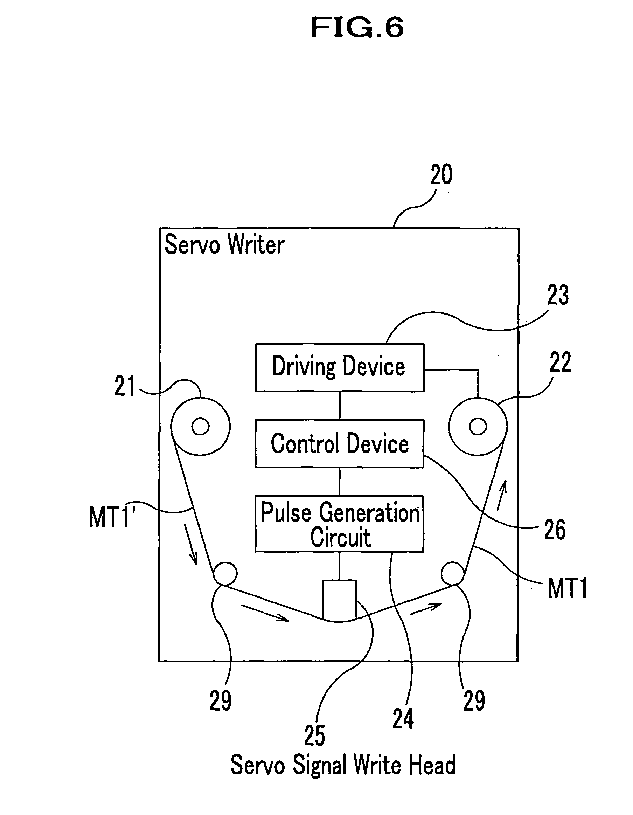

Fig. 6 is a configuration view of a servo writer used in a treatment, by which servo signals are written onto the magnetic tape.

A servo writer 20 includes, as main components, a feeding reel 21, a winging reel 22, a driving device 23, a pulse generation circuit 24, a servo signal write head 25 and a control device 26. Moreover, the servo writer 20 also includes a power source device, a cleaning device for cleaning the magnet tape MT1, a verifying device for testing the written servo signals SS1 and the like, which all are not shown in the figure.

The magnetic tape MT1' which had been formed by cutting an original web into a product-width and onto which a servo signals are not written yet is set by a large-diameter reel at the feeding reel 21. The feeding reel 21 feeds the magnetic tape MT1' upon writing of the servo signals SS1 thereonto. The magnetic tape MT1' fed from the feeding reel 21 is guided by a guide 29 and the like and, then is transported to the servo signal write head 25. Further, the servo signals SS1 are written onto the magnetic tape MT1 by the serve signal write head 25. Subsequently, the magnetic tape MT1 is guided by a guide 29 and the like and, then is transported to the winging reel 22. The winging reel 22 is rotatably driven by the driving device 23 and, thus takes up the magnetic tape MT1 onto which the servo signals SS1 has been written.

The driving device 23, which rotatably drives the winging reel 22, includes a motor, a motor driving circuit for supplying a current to the motor, a gear for coupling the shaft of the motor with the winging reel 22, and the like, which all are not in the figure. The driving device 23 generates a motor current in the motor driving circuit, based on a motor current signal from the control device 26, supplies the motor current to the motor, then transfers rotatably driving power of the motor to the winging reel 22 through the gear, and as a result, the winging reel 22 is rotatably driven.

The pulse generation circuit 24, which supplies a recording pulse current PC1 to the servo signal write head 25, includes various electronic components. The pulse generation circuit 24 repeats such a pattern that a positive-polarity pulse current PP1, a zero current ZC1, a pulse current PP1 and a zero current ZC1 are continuously generated in this order and, subsequently no current is generated during a predetermined period (zero current ZC1), based on the pulse control signal from the control device 26 (refer to Fig. 2C). In such a manner, the recording pulse current PC1 is generated. Furthermore, the pulse generation circuit 24 supplies this recording pulse current PC1 to a coil (not shown) of the servo signal write head 25. The pulse current PP1 is large enough to magnetize the magnetic layer of the magnetic tape MT1' by means of leakage flux from the head gap, and this current amount is set based on the property of coil of the servo signal write head 25 and the like. Also, the pulse width (duration) of the pulse current PP1 can define the predetermined width of the servo pattern SP1 along the length of the magnetic tape MT1, and this pulse width is set based on the traveling speed of the magnetic tape MT1', the shape of head gap of the servo signal write head 25, and the like. Further, the predetermined period of the zero current ZC1 can define the predetermined interval constituting the servo pattern SP1, and is set based on the traveling speed of the magnetic tape MT1' and the like.

The servo signal write head 25, which writes the servo signal SS1, includes a coil for generating magnetic flux (not shown in the figure) and a head gap formed therein (not shown in the figure) . In the servo signal write head 25, four head gaps are arranged in a line on positions corresponding to those of four servo bands SB1, SB1, SB1 and SB1 along the width of the magnetic tape MT1. Each head gap is formed by means of a lithography technique to which a semiconductor technique is applied, and has a trapezoid shape of which sides each form a predetermined angle with respect to the length of the magnetic tape MT1.

The control device 26, which controls the operation of each section in the servo writer 20, includes a central processing unit (CPU), various memories and the like. The control device 26 generates a motor current signal for controlling the motor current of the driving device 23, and transmits the signal to the driving device 23, in order to maintain the magnetic tape MT1' at a constant traveling speed upon writing of the servo signal SS1. The control device 26 generates a pulse control signal for controlling the current value, pulse width and the generating timing of the pulse current PP1 of the recording pulse current PC1 and transmits the signal to the pulse generation circuit 24, in order to set the servo signal SS1 which defines the width of the servo pattern SP1 along the length of the magnetic tape MT1 and a predetermined interval between the servo patterns SP1. Specifically, the control device 26 generates the above pattern constituted of the pulse current PP1, the zero current ZC1, the pulse current PP1 and the zero current ZC1.

A step will be described of writing the servo signal SS1 onto the magnetic tape MT1' onto which the servo signal SS1 has not been written yet, by use of the above-described servo writer.

First, the reel of magnetic tape MT'1 which has been slit is set as the feeding reel 21 of the servo writer 20 and, then one end of the magnetic tape MT1' is coupled to the core of the winging reel 22. Here, in a general writing step, after the magnetic tape MT1' which has been magnetized in one direction (forward direction) in the orientation treatment 12 is demagnetized, the servo signal SS1 is written thereonto. However, in this step, it is noted that the magnetic tape MT1' which has not been demagnetized is used.

The magnetic tape MT1' is run, while being guided by the guide 29 and the like and being taken up by the winging reel 22 which is driven by the driving device 23. Then, the magnetic tape MT1' slides over the servo signal write head 25 while being in contact therewith, so that the servo signal SS1 is written onto the magnetic tape MT'1.

When the servo signal SS1 is written onto the magnetic tape MT1', a recording pulse current PC1 which has the predetermined pattern constituted of a string of pulse is fed by the control device 26 to the coil around the head gap of the servo signal write head 25. The recording pulse current PC1 has a pattern in which the pulse current PP1, zero current ZC1, pulse current PP1 and zero current ZC1 appear by turns every predetermined period. The pulse generation circuit 24 supplies the recording pulse current PC1 to the servo signal write head 25. In this case, when the pulse current PP1 is fed to the coil, the magnetic layer of the magnetic tape MT1' is magnetized in the direction opposite to the direction in which the magnetic layer has been magnetized by means of leakage flux form the head gap. In contrast to this, when the zero current ZC1 is fed thereto, the magnetic layer of the magnetic tape MT1' is not magnetized. Consequently, the servo pattern SP1 which is magnetized in the reverse direction is formed on the servo band SB1 which has been magnetized in the forward direction. It is obvious that portions other than the servo patterns SP1 on the servo band SB1 maintains magnetized in the forward direction (refer to Fig. 2).

The magnetic tape MT1 onto which the servo signal SS1 has been written is taken up by the winging reel 22. Subsequently, the magnetic tape is cut to a predetermined length in accordance to specifications of products, and is accommodated in a cartridge case or the like (not shown).

By employing the above fabricating method, the magnetic tape MT1 is fabricated, and using this magnetic tape MT1 can attain the above-described effect. Specifically, the orientation of the servo pattern SP1 forms an angle of 180 degrees with respect to that of other portion on the servo band SB1. In other words, magnetic field greatly changes at a boundary therebetween. Accordingly, an output which is read from the signal on the servo band SB1 has a high SN ratio.

In addition, with the above fabricating method, a servo signal SS1 can be written onto the magnetic tape MT1 without demagnetizing it after the orientation treatment 12. As a result, it is possible to produce an effect that fabricating costs can be made lower than before.

Furthermore, a technique for adjusting the indentation hardness of the magnetic layer within the above range is not limited to specific one. However, it is effective that the technique includes the steps of selecting the resin composition of the magnetic layer, forming an appropriate roll arrangement used at the calender treatment, adjusting thermal temperature, transport speed and pressure, temperature and humidity in a thermal treatment after the calender treatment, heating period, and the like. The magnetic layer of the magnetic tape MT1 which is treated by calender rolls being constituted only by metal rolls has the higher surface pressure and the harder surface than that treated by calender rolls constituted by metal rolls and resin rolls. Further, the surface of the magnetic layer can be hardened by reducing the treatment speed, increasing the pressure, rising the treatment temperature or the like. To provide the magnetic layer having the softer surface, the above treatment condition may merely be reversed.

EXAMPLE

Next, the present invention will concretely be described by use of examples and comparative examples, but the present invention is not limited to these examples. Here, it should be noted that 'parts' means 'parts by weight' in following examples.

Example 1

<Preparation of Coating Solution for Magnetic Layer>

Following components were supplied to an open kneader by a following proportion, and were kneaded therein. Then, the kneaded mixture was dispersed by a sand mill. Five parts of polyisocyanate (Coronate L manufactured by Nippon Polyurethane Industry Co., Ltd.) was added to the dispersed solution, and 40 parts of a mixed solvent of methyl ethyl ketone and cyclohexanone was further added thereto. The obtained solution was filtered by use of a filter having an average pore size of $1\mu m$. In this way, a coating solution for a magnetic layer was prepared.

| Magnetic Layer | |
|---|---|
| Ferromagnetic metal powder (Composition Fe/Co = 100/30) | 100 parts |
| Hc | 2350Oe (187.0A/m) |
| Specific surface area by BET method | $49m^2/g$ |
| Crystalline size | 120nm |
| Particle size (major axis diameter) | $0.070 \mu m$ |
| Acicular ratio 7 | |
| $\sigma s$: 145emu/g ($145A \cdot m^2/Kg$) | |
| Vinyl chloride copolymer (MR-110 manufactured by Nippon Zeon Co., Ltd) | 10 parts |
| Polyurethane resin | 6 parts |
| $\alpha$-$Al_2O_3$ (Mohs hardness 9) | 5 parts |
| Carbon black (Average particle diameter $0.08\mu m$) | 0.5 parts |

(continued)

| Magnetic Layer | |
|---|---|
| Butyl stearate | 1 part |
| Stearic acid | 5 parts |
| Methyl Ethyl Ketone | 90 parts |
| Cyclohexanone | 30 parts |
| Toluene | 60 parts |

<Preparation of Coating Solution for Non-magnetic Layer>

Following components were supplied to an open kneader by a following proportion, and were kneaded therein. Then, the kneaded mixture was dispersed by a sand mill. Five parts of polyisocyanate (Coronate L manufactured by Nippon Polyurethane Industry Co., Ltd.) was added to the dispersed solution, and 40 parts of a mixed solvent of methyl ethyl ketone and cyclohexanone was further added thereto. The obtained solution was filtered by use of a filter having an average pore size of 1μm. In this way, a coating solution for a non-magnetic layer was prepared.

| Non-magnetic powder $\alpha$-$Fe_2O_3$ hematite | 80 parts |
|---|---|
| Major axis length | 0.10μm |
| Specific surface area by BET method | $52m^2/g$ |
| pH | 6 |
| Tap density | 0.8 |
| DBP oil absorption quantity | 27 to 38g/100 g |
| Carbon black | 20 parts |
| Average primary particle diameter | 16nm |
| DBP oil absorption quantity | 80ml/100 g |
| pH | 8.0 |
| Specific surface area by BET method | $250m^2/g$ |
| Volatile content | 1.5% |
| Vinyl Chloride copolymer (MR-110 manufactured by Nippon Zeon Co., Ltd.) | 12 parts |
| Polyester polyurethane resin A | 5 parts |
| $\alpha$-$Al_2O_3$ (Average particle diameter 0.2μm) dispersed solution | 1 part |
| Butyl stearate | 1 part |
| Stearic acid | 1 part |
| Methyl Ethyl Ketone | 100 parts |
| Cyclohexanone | 50 parts |
| Toluene | 50 parts |

<Preparation of Coating Solution for Backcoat Layer>

Mixtures A, B having following respective components were separately supplied to a roll mill, and were separately pre-kneeled therein. In the way, the kneaded mixtures A, B were prepared.

(A)

| Carbon black (BP-800 manufactured by carbot inc.) | 100 parts |
|---|---|
| Nitrocellulose RS1/2 | 100 parts |
| Polyurethane (N2301 manufactured by Nippon Polyurethane Industry Co., Ltd.) Disperser | 100 parts |
| Copper oleate | 5 parts |

(continued)

| | |
|---|---|
| Copper phthalocyanine | 5 parts |
| Precipitated barium sulfate | 5 parts |
| Methyl ethyl ketone | 500 parts |
| Toluene | 500 parts |

(B)

| | |
|---|---|
| Carbon black | 100 parts |
| SSA | 8.5m$^2$/g |
| Average particle diameter | 270μm |
| DBP oil absorption quantity | 36ml/100g |
| pH | 10 |
| Nitrocellulose | 100 parts |
| Polyurethane | 30 parts |
| (N2301 manufactured by Nippon Polyurethane Industry Co., Ltd.) | |
| Methyl ethyl ketone | 300 parts |
| Toluene | 300 parts |

Next, kneaded mixtures A, B were supplied to a sand grinder, and were dispersed therein. Following components were added to the dispersed mixtures. In the way, the coating solution for a backcoat layer was prepared.

| | |
|---|---|
| Polyester resin | 5 parts |
| (Vylon300 manufactured by Toyobo Co., Ltd) | |
| Polyisocyanate | 5 parts |
| (Coronate L manufactured by Nippon Polyurethane Industry Co., Ltd.) | |

<Fabrication of Magnetic Tape>

A polyethylene terephthalate (6.0μm thickness) film was provided with a hydrophilic surface having center line average roughness of 0.01μm, where a magnetic layer was to be formed had was prepared. The coating solution for a non-magnetic layer was coated on the surface of the film where the magnet layer was to be formed, so that the non-magnetic layer was 1.5μm thick after being dried. Subsequently, the coating solution for a magnetic layer was coated on the non-magnetic layer to 0.1 μm thick. Accordingly, the non-magnetic layer and the magnetic layer were formed on one surface of the film in this order. While two layers were still wet, the magnetic layer was subjected to an orientation treatment by applying magnetic field thereto by use of a rare earth magnet having the magnetic force of 0.5T and a solenoid having the magnetic force of 0.4T. After two layers were dried, the coating solution for a backcoat layer was coated on the surface opposite to that where the magnet layer was formed. Then, after being dried, the backcoat layer of 0.3μm thick was formed. Consequently, provided was the laminated film which had one surface provided with thereon the non-magnet layer and the magnet layer in this order, and which had the other surface provided with the backcoat layer thereon.

Then, the laminated film was supplied to a calender device in which calender rolls each constituted by a pair of metal rolls are arranged in seven stages. Further, the laminated film was subjected to a pressuring treatment at a temperature of 100 degrees at a speed of 200m/min. Subsequently, the film was slit to a width of 1/2 inch, thereby providing a blank magnetic tape.

Next, this blank magnetic tape was subjected to the servo treatment, thereby providing a magnetic tape for digital recording. Here, the servo treatment was performed by writing a servo signal onto the blank magnetic tape by use of the servo writer as shown in Fig. 6.

Example 2

A blank magnetic tape was fabricated in the same manner as that of the example 1, with the exception that the pressuring treatment was performed at a temperature of 100 degrees at a speed of 100m/min with the calender device. The servo signal was written onto the fabricated blank magnetic tape in the same manner as that of the example 1, thereby providing a magnetic tape for digital recording.

Example 3

A blank magnetic tape was fabricated in the same manner as that of the example 1, with the exception that the pressuring treatment was performed at a temperature of 100 degrees at a speed of 300m/min with the calender device. The servo signal was written onto the fabricated blank magnetic tape in the same manner as that of the example 1, thereby providing a magnetic tape for digital recording.

Comparative example 1

A magnetic tape for digital recording was fabricated in the same manner as that of the example 1, with the exception that the servo signal was written onto the servo band which was not magnetized.

Comparative example 2

A blank magnetic tape was fabricated in the same manner as that of the example 1, with the exception that the pressurizing treatment was performed at a temperature of 100 degrees at a speed of 200m/min by use of a calender device in which pairs of calender rolls each constituted of a metal roll and a resin roll were arranged in seven stages. The servo signal was written onto the fabricated blank magnetic tape in the same manner as that of the example 1, thereby providing a magnetic tape for digital recording.

Comparative example 3

A blank magnetic tape was fabricated in the same manner as that of the example 1, with the exception that the pressurizing treatment was performed at a temperature of 100 degrees at a speed of 50m/min by use of a calender device. The servo signal was written onto the fabricated blank magnetic tape in the same manner as that of the example 1, thereby providing a magnetic tape for digital recording.

For each of the magnetic tapes formed in the examples 1 to 3 and the comparative examples 1 to 3, indentation hardness, the contaminant of servo writer, the output of a servo signal, and error rate were measured in accordance with following methods. The result of them is given in a table 1.

<Measurement of Indentation hardness>

A load-displacement amount curve for the magnetic layer of each magnetic tape (refer to Fig. 4) was determined by a following measurement system under a following measurement condition. Then, the indentation hardness was calculated based on the equation (1), the maximum displacement amount (Hmax) and the maximum load (Pmax) of the measured curve upon release of the load.

Measurement System

Load generating system: electromagnetic power system
Indenter: triangular pyramid shaped indenter, blade angle $\alpha$ of 65 degrees, a ridge angle $\beta$ of 115 degrees, and formed of diamond
Loading range: 2mgf to 100gf (20$\mu$N to 1N)
Loading resolution: 0.2$\mu$N
Displacement measuring method: the movement of the indenter was determined by sensing the capacitance thereof.
Displacing range: up to 20$\mu$m
Displacement sensing resolution: 0.3nm

Measurement Condition

Test load: 5mgf
Splitting number: 100
Step interval: 100msec
How to apply load: the load was continuously increased for over 10 seconds until the load reaches to 5mgf

(49.0μN), is maintained at 5mgf for over 1 second and, then the load was released for over 10 seconds.

Measuring surroundings: temperature of 28±0.1 degrees

Number of measuring points: the measurement is done at seven points on the magnetic layer. The value of n=5 from the center of the measured value was used as a measured value.

<Contaminant of Servo Writer>

A magnetic tape having the whole length of 9000m was run by ten passes with a servo writer, and the servo signal was written thereonto. After the ten passes, the traveling system of the servo writer was checked. The contaminated state therein was evaluated in terms of three point scale by use of three criteria below, based on the presence of black deposit.

O: Black deposit was hardly visible.

Δ: Slight black deposit was visible around the edges of the magnetic head, but no contaminant was visible in the positions other than the head.

x: Black powder was adhered on the positions other than the head and the guide in addition to them.

<Output of Servo Signal>

When the servo signal was written onto a magnetic tape by a servo writer, the written servo signal was read from the magnetic tape, by a read head which was provided in the downstream position of a write head in the traveling system, and the read servo signal was measured by an oscilloscope.

<Error Rate>

A signal having a linear recording density of 144Kbpi was recorded onto a magnetic tape in accordance with a 8-10 transfer PRI equalization scheme. Subsequently, the signal was read from the recorded tape by a LTO drive, and the error rate thereof was measured.

Table 1

| | | Example 1 | Example 2 | Example 3 | Comparative example 1 | Comparative example 2 | Comparative example 3 |
|---|---|---|---|---|---|---|---|
| Method of writing servo signals | | Two-way magnetization | Two-way magnetization | Two-way magnetization | One-way magnetization | Two-way magnetization | Two-way magnetization |
| Magnetic layer indentation hardness of magnetic layer | Kg/mm² | 90 | 140 | 60 | 80 | 45 | 200 |
| Plastic deformation quantity | μm | 0.03 | 0.05 | 0.04 | 0.03 | 0.06 | 0.02 |
| Output of servo signal | — | 20 | 30 | 25 | 5 | 30 | 30 |
| Contaminant of traveling system of servo writer | — | ○ | ○ | ○ | × | × | ○ |
| Error ratio | — | $1 \times 10^{-7}$ | $2 \times 10^{-7}$ | $2 \times 10^{-7}$ | $1 \times 10^{-4}$ | $6 \times 10^{-5}$ | $5 \times 10^{-5}$ |

The magnetic recording medium of the present invention provides a higher output which is read from the servo signal that has been recorded on the servo band, by a servo signal read device provided in the magnetic head. This makes it possible to improve the SN ratio of the output. Further, since the magnetic recording medium also provides the magnetic layer of which top surface has an appropriate range of indentation hardness, the magnetic layer is tough but has an appropriate flexibility. As a result, the contact with a magnetic head is optimized, the electromagnetic conversion characteristics are improved, and the error ratio is reduced. Moreover, chips or cuttings of the magnetic layer are decreased, which are generated when the magnetic recording medium runs in contact with a guide pole or a magnetic head in a servo writer or driving system. This prevents the movement of the chips or cuttings from the magnetic layer of the magnetic recording medium. Consequently, deposit adhered to the head, that is, the head contaminant is reduced.

**Claims**

1.  A magnetic recording medium, comprising:

    a base film; and
    a magnetic layer formed on the base film, the magnetic layer including:

        a servo band onto which a servo signal for controlling tracking of a magnetic head is written; and
        a data band onto which data are recorded,

        **characterized in that** the servo signal is written onto the servo band which has been magnetized in one direction out of two directions along length of the magnetic recording medium, by magnetizing the servo band in a direction opposite to the one direction, and
        **in that** the magnetic layer is provided with a surface having indentation hardness ranging from 60 to 140Kg/mm$^2$, which is measured by use of a diamond indenter.

2.  A magnetic recording medium according to claim 1, **characterized in that** the data band is not magnetized.

3.  A magnetic recording medium according to claim 1 or 2, **characterized in that** the magnetic layer has a thickness ranging from 10 to 200nm.

# FIG.1

1 Magnetic Tape

4 Magnetic Layer
3 Non-magnetic Layer
2 Base Film
5 Backcoat Layer

## FIG.2A

Magnetic Tape MT1

SP1
Ba   Bb

SB1   Magnetic Tape Transport Direction →

H

SS1
SH
WH
DB1
RH
SS1
SH
WH
RH

SB1

## FIG.2B

Output Read from Servo Signal

## FIG.2C

Recording Pulse Current PC1

PP1   ZC1   PP1
ZC1   ZC1

# FIG.3

TOP VIEW

# FIG.4

# FIG.5

Base Film BF

Coating Treatment 11

Orientation Treatment 12

Dry Treatment 13

Calendar Treatment 14

Slit Treatment 15

Web W

12a

Magnetic Tape MT1'

12b

Magnetic Tape MT1'

EP 1 494 212 A1

# FIG.6

20

Servo Writer

23

Driving Device

22

21

Control Device

MT1'

Pulse Generation
Circuit

26

MT1

29          29

25          24

Servo Signal Write Head

**European Patent Office**

# EUROPEAN SEARCH REPORT

Application Number

EP 04 01 4149

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 2003/095353 A1 (NAKAO TORU) 22 May 2003 (2003-05-22) * page 2, paragraph 13 * * page 6, paragraph 57 - paragraph 60; claims 19,20 * | 1-3 | G11B5/584 G11B5/64 |
| Y | US 5 340 635 A (ISOBE RYOSUKE ET AL) 23 August 1994 (1994-08-23) * column 2, line 37 - line 55; claim 1 * | 1-3 | |
| Y | US 4 561 034 A (YAMAGUCHI YOSHITAKE ET AL) 24 December 1985 (1985-12-24) * column 2, line 45 - line 57 * | 3 | |
| A | US 6 033 760 A (ITO TADASHI ET AL) 7 March 2000 (2000-03-07) * column 4, line 11 - line 23 * * column 7, line 14 - line 54 * | 1,3 | |

**TECHNICAL FIELDS SEARCHED (Int.Cl.7)**

G11B

The present search report has been drawn up for all claims

| Place of search | Date of completion of the search | Examiner |
|---|---|---|
| The Hague | 22 October 2004 | Ressenaar, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 04 01 4149

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2004

| Patent document cited in search report | | Publication date | Patent family member(s) | | Publication date |
|---|---|---|---|---|---|
| US 2003095353 | A1 | 22-05-2003 | JP | 2003157634 A | 30-05-2003 |
| US 5340635 | A | 23-08-1994 | JP | 3230163 B2 | 19-11-2001 |
| | | | JP | 7176029 A | 14-07-1995 |
| | | | DE | 4218508 A1 | 10-12-1992 |
| US 4561034 | A | 24-12-1985 | JP | 3000699 B | 08-01-1991 |
| | | | JP | 58091528 A | 31-05-1983 |
| | | | DE | 3276550 D1 | 16-07-1987 |
| | | | EP | 0080204 A2 | 01-06-1983 |
| US 6033760 | A | 07-03-2000 | NONE | | |

EPO FORM P0459

For more details about this annex : see Official Journal of the European Patent Office, No. 12/82